## Europäisches Patentamt

## European Patent Office

## Office européen des brevets

(19)

(11) Veröffentlichungsnummer: **0 166 028**
A2

(12)

# EUROPÄISCHE PATENTANMELDUNG

(21) Anmeldenummer: 84115142.6

(22) Anmeldetag: 11.12.84

(51) Int. Cl.⁴: **H 01 S 3/086**

(30) Priorität: 25.06.84 DE 3423381

(43) Veröffentlichungstag der Anmeldung: 02.01.86
Patentblatt 86/1

(84) Benannte Vertragsstaaten: **BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Dost, Willibald, Dipl.-Ing. (FH), Schaffhauser Strasse 22/6, D-8000 München 71 (DE)**
Erfinder: **Kreutzer, Hans, Dipl.-Ing.(FH), Ostmarkstrasse 20, D-8000 München 70 (DE)**

(54) Justiereinrichtung für einen Reflektorspiegel eines Laserresonators.

(57) Justiereinrichtung für einen Reflektorspiegel eines Laserresonators.

Bei Laserresonatoren müssen die Reflektorspiegel genau parallel zueinander einjustiert werden. Hierzu ist eine aus einem Träger (9) und einem damit einteiligen Justagekopf (7) für den justierbaren Reflektorspiegel (8) bestehende Einrichtung durch einen äußeren und zwei innere radiale Einstiche (3 bzw. 1,2) mit einem H-förmigen Einstichsystem ausgebildet, so daß sich eine axial elastische, jedoch ausreichend seiten- und temperaturstabile Justierung ergibt. Die Erfindung ist zur Justierung von Reflektorspiegeln bei Laserresonatoren geeignet.

0166028

Siemens Aktiengesellschaft     Unser Zeichen:
Berlin und München            VPA   84 P 1 4 5 2  E


Justiereinrichtung für einen Reflektorspiegel eines
Laserresonators.

Die Erfindung betrifft eine Justiereinrichtung für einen
Reflektorspiegel eines Laserresonators, bei der der
Reflektorspiegel in einem einteilig mit einem Träger
ausgebildeten Justagekopf aufgenommen ist, wobei der Träger
und der Justagekopf mit einer fluchtenden Durchgangsöffnung
ausgebildet sind, zwischen dem Träger und dem Justagekopf
ein radial gerichteter, rundum laufender äußerer Einstich
vorgesehen ist und der Justagekopf mittels an ihm an den
Ecken eines Dreiecks angeordneter, gegen die Stirnseite des
Trägers wirkender Justierschrauben gegen den Träger
verkippbar ist.

Bei Lasern müssen die optischen Umkehrelemente des
Resonators mit einfachen Mitteln möglichst genau parallel
zueinander einjustiert werden können. Dabei soll die einmal eingestellte Justierung möglichst temperaturstabil sein.
Zur Justierung von Reflektorspiegeln bei Laserresonatoren
sind verschiedene Justiereinrichtungen bekannt geworden.
Häufig werden hierbei eingelötete oder eingeschweißte Metallbälge verwendet. Diese können jedoch Dichtigkeitsprobleme verursachen. Außerdem können Stabilitätsprobleme
durch relativ große Weichheit und relativ kleine Seitenstabilität solcher Bälge auftreten.

Durch die DE-OS 31 30 420 ist eine Justiereinrichtung der
eingangs genannten Art bekannt, bei welcher der Justagekopf und der Träger aus einem Stück bestehen und zwischen
dem Träger und dem Justagekopf ein radial gerichteter,

HB 1 Wt / 18.6.84

rundum laufender äußerer Einstich vorgesehen ist. Die Justierung eines Reflektorspiegels parallel zu dem anderen Reflektorspiegel erfolgt dabei mittels gegen die Stirnseite des Trägers wirkender, in dem Justagekopf vorgesehener Justierschrauben, mit deren Hilfe der Justagekopf infolge des radialen äußeren Einstichs gegen den Träger verkippbar ist. Derartige Justiereinrichtungen besitzen einen einfachen, stabilen Aufbau. Eine große Stabilität einer mit einem äußeren radialen Einstich versehenen Justiereinrichtung kann jedoch zur Folge haben, daß beim Justieren im Einstichbereich zu große Verspannungen auftreten. Diese können bei einer Temperaturänderung zu einer Veränderung der ursprünglichen Justageeinstellung führen.

Der Erfindung liegt daher die Aufgabe zugrunde, eine Justiereinrichtung der eingangs genannten Art so auszubilden, daß sie trotz der erforderlichen Stabilität eine ausreichende axiale Elastizität und eine hohe Temperaturbeständigkeit aufweist.

Diese Aufgabe wird bei einer Justiereinrichtung der eingangs genannten Art gemäß der Erfindung dadurch gelöst, daß sowohl der Träger als auch der Justagekopf im Bereich ihrer dem äußeren Einstich benachbarten Stirnseiten mit jeweils einem inneren, radial gerichteten und rundum laufenden Einstich ausgebildet ist, und daß die inneren Einstiche von dem dazwischenliegenden äußeren Einstich jeweils durch eine dünne, scheibenförmige Wand getrennt sind.

Bei einer erfindungsgemäßen Justiereinrichtung sind neben dem äußeren radialen Einstich noch zwei innere radiale Einstiche vorgesehen, so daß Träger und Justagekopf der Justiereinrichtung mit einem H-förmig angeordneten Einstichsystem ausgebildet sind. Dabei wirken die die inneren Einstiche vom äußeren Einstich trennenden Wände wie zwei scheibenförmige Federn, deren Federcharakteristik derjenigen von Tellerfedern gleicht. Auf diese Weise wird bei der erfindungsgemäßen Justiereinrichtung der Vorteil des Balges, nämlich die axiale Elastizität erzielt und mit dem Vorteil einer gegenüber einem Balg höheren Seitenstabilität verbunden. Außerdem geben bei der erfindungsgemäßen Justiereinrichtung die drei Justierschrauben den scheibenförmigen Federn eine axiale Vorspannung. Dies bewirkt, daß der Justagekopf an den Träger gezogen und somit eine Dejustierung bei Temperaturveränderungen oder ein Prellen bei Rüttelbeanspruchungen verhindert wird. Die erfindungsgemäße Justiereinrichtung weist daher auch eine hohe Temperaturstabilität auf. Schließlich ergibt sich gegenüber Justiereinrichtungen mit Bälgen der Vorteil der absoluten Dichtigkeit, da der Justagekopf fester Bestandteil des Trägers ist und somit keine zusätzlichen Verbindungstechniken erforderlich sind.

Vorteilhafte Ausgestaltungen des Gegenstandes des Patentanspruchs 1 sind in den Unteransprüchen angegeben.

Ein Ausführungsbeispiel einer Justiereinrichtung nach der Erfindung wird im folgenden anhand der Zeichnung näher beschrieben. Dabei zeigen die

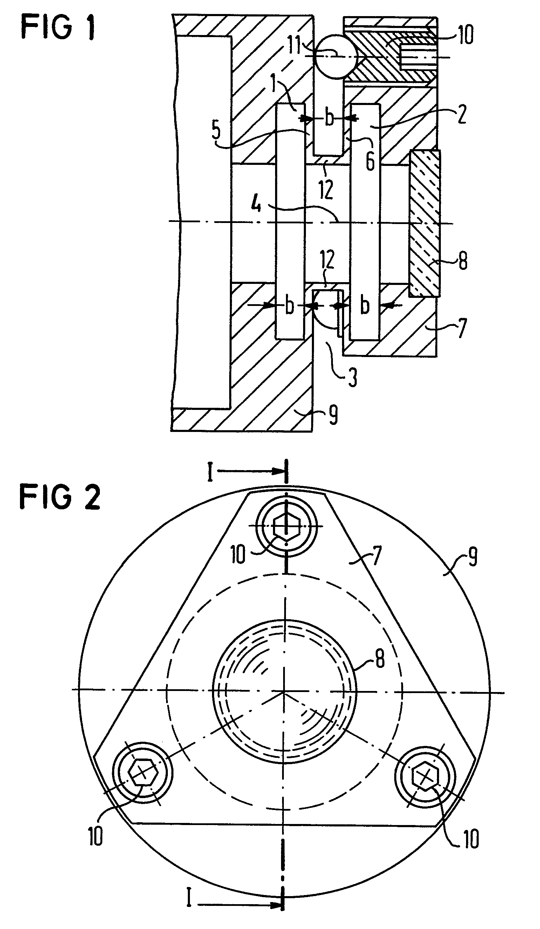

Fig. 1  die Justiereinrichtung im Schnitt I-I nach Fig.2 und
Fig. 2  eine stirnseitige Ansicht auf die Justiereinrichtung.

Die Justiereinrichtung für einen parallel zu einem nicht dargestellten zweiten Reflektorspiegel eines Laserresonators einzujustierenden Reflektorspiegel, z.B. ein Auskoppelfenster 8, besteht aus einem in seiner Form beliebig gestaltbaren Träger 9, z.B. einem scheibenförmigen Gehäuseteil oder einem rohrförmigen Resonatorträger des Lasers, und
aus einem mit dem Träger einteiligen, an dessen Stirnseite
vorgesehenen Justagekopf 7, der hier als etwa dreieckförmige
Platte mit abgerundeten Ecken ausgebildet ist. In dem
Justagekopf 7 ist der Reflektorspiegel 8 aufgenommen und in
nicht näher dargestellter, an sich bekannter Weise gehalten.
Träger und Justagekopf sind mit einer fluchtenden Durchgangsöffnung 4 für den Laserstrahl ausgebildet. Zwischen der
freien Stirnseite des Trägers 9 und dem Justagekopf 7 ist ei
radial gerichteter, rundum laufender äußerer Einstich 3
vorgesehen, so daß der Justagekopf mittels in an sich
bekannter Weise(DE-OS 31 30 420) ausgebildeter und an den Ec
eines Dreiecks angeordneter, gegen die Stirnseite des Träger
wirkender Justierschrauben 10 und der zugehörigen Kugeln 11
mit seiner Längsachse gegen den Träger bzw. dessen Längsachse verkippbar ist. Sowohl der Träger 9 als auch der
Justagekopf 7, d.h. deren Durchgangsöffnung 4, sind im
Bereich ihrer dem äußeren Einstich 3 benachbarten, durch den
äußeren Einstich gebildeten Stirnseiten mit jeweils einem
inneren, radial gerichteten und rundum laufenden, d.h. die
Längsachse von Träger- bzw. Justagekopf kreisförmig umgebenden inneren Einstich 1 bzw. 2 ausgebildet, wobei die
inneren Einstiche von dem dazwischenliegenden äußeren Einstich 3 jeweils durch eine scheibenförmige Wand 5 bzw. 6
getrennt sind. Diese Wände bilden somit durch die zwei
inneren Einstiche 1 und 2, den äußeren Einstich 3 und die
Durchgangsöffnung 4 zwei scheibenförmige, miteinander verbundene Federn 5 und 6, die sich hinsichtlich ihrer Federcharakteristik wie Tellerfedern verhalten, wobei die Feder 6
direkt mit dem Justagekopf 7 verbunden ist bzw. dessen
Bestandteil ist. Der äußere Einstich 3 reicht bis auf eine
der Dicke der Federn 5,6 entsprechende Wandstärke

0166028

12 an die Durchgangsöffnung 4 heran. Auf diese Weise ergibt sich ein Einstichsystem von H-förmiger Anordnung. Hierbei ist die Breite b der Einstiche 1,2 und 3 gleich, wobei die inneren Einstiche 1,2 den gleichen Durchmesser aufweisen, der etwa gleich dem zweifachen Durchmesser der Durchgangsöffnung 4 ist.

Die Verstellung des Justagekopfes 7 erfolgt durch die bereits erwähnten drei Schrauben 10, die über die Kugeln 11 auf den Träger 9 drücken und dabei den scheibenförmigen Federn 5 und 6 eine axiale Vorspannung geben. Dadurch wird der Justagekopf 7 an den Träger 9 gezogen. Durch eine entsprechende Verstellung der Schrauben 10 kann der im Justagekopf 7 befindliche Reflektorspiegel 8 in jede beliebige Lage justiert und mit hoher Genauigkeit parallel zu dem nicht dargestellten anderen Spiegel des Laserresonators eingestellt werden.

5 Patentansprüche
2 Figuren

Patentansprüche:

1. Justiereinrichtung für einen Reflektorspiegel eines Laserresonators, bei der der Reflektorspiegel in einem einteilig mit einem Träger ausgebildeten Justagekopf aufgenommen ist, wobei der Träger und der Justagekopf mit einer fluchtenden Durchgangsöffnung ausgebildet sind, zwischen dem Träger und dem Justagekopf ein radial gerichteter, rundum laufender äußerer Einstich vorgesehen ist und der Justagekopf mittels an ihm an den Ecken eines Dreiecks angeordneter, gegen die Stirnseite des Trägers wirkender Justierschrauben gegen den Träger verkippbar ist, d a d u r c h  g e k e n n z e i c h n e t , daß sowohl der Träger (9) als auch der Justagekopf (7) im Bereich ihrer dem äußeren Einstich (3) benachbarten Stirnseiten mit jeweils einem inneren, radial gerichteten und rundum laufenden Einstich (1 bzw. 2) ausgebildet ist, und daß die inneren Einstiche (1,2) von dem dazwischenliegenden äußeren Einstich (3) jeweils durch eine dünne, scheibenförmige Wand (5 bzw. 6) getrennt sind.

2. Justiereinrichtung nach Anspruch 1, dadurch gekennzeichnet, daß der äußere Einstich (3) bis auf eine der Dicke der Wände (5,6) entsprechende Wandstärke (12) an die Durchgangsöffnung (4) reicht.

3. Justiereinrichtung nach Anspruch 1 oder 2, dadurch gekennzeichnet, daß die Breite (b) der Einstiche (1,2,3) gleich ist.

4. Justiereinrichtung nach einem der vorhergehenden Ansprüche, dadurch gekennzeichnet, daß die inneren Einstiche (1,2) den gleichen Durchmesser aufweisen.

5. Justiereinrichtung nach einem der vorhergehenden Ansprüche, dadurch gekennzeichnet, daß der Durchmesser der inneren Einstiche (1,2) etwa gleich dem zweifachen Durchmesser der Durchgangsöffnung (4) ist.

0166028

1/1

FIG 1

FIG 2